# EUROPÄISCHE PATENTSCHRIFT

(11) **EP 1 971 108 B1**
(45) Veröffentlichungstag und Bekanntmachung des Hinweises auf die Patenterteilung: **18.02.2015**
(21) Anmeldenummer: 08159082.0
(22) Anmeldetag: 11.10.2002
(51) Int. Cl.: H04L 29/06, G07F 19/00, G07C 13/00

(54) **Identifikation eines Benutzers eines Mobilterminals und Generierung einer Aktionsberechtigung**
Identification of a user of a mobile terminal and generation of an action authorisation
Identification d'un utilisateur d'un terminal mobile et génération d'une autorisation d'action

(30) Priorität: 30.07.2002 EP 02016883
(43) Veröffentlichungstag der Anmeldung: 17.09.2008
(62) Teilanmeldung aus: 02781243.7
(73) Patentinhaber: Modulatec GmbH, 64367 Mühltal (DE)
(72) Erfinder: Chappuis, Pierre, 3073 Gümligen (CH)
(74) Vertreter: WSL Patentanwälte Partnerschaft mbB

(56) Entgegenhaltungen:
- EP-A- 1 160 744
- EP-A- 1 178 444
- WO-A-98/47116
- US-A- 5 907 801
- US-A- 6 078 908

## Beschreibung

Die vorliegende Erfindung bezieht sich auf ein Verfahren. Verfahren zur Abwicklung eines Auszahlungsvorganges zwischen einem Benutzer(I) eines Mobiltelefons unter Zuhilfenahme des Mobiltelefons, eines Identifikationsmoduls und eines Terminals eines Geldautomaten, aufweisend die folgenden Schritte:
a) Übersendung einer Aktionsberechtigungs-Anforderung für den Auszahlungsvorgang zusammen mit einem Identifikationscode von dem Mobiltelefon und einer Kennnummer des betreffenden Geldautomaten an das Identifikationsmodul, wobei die Aktionsberechtigungs-Anforderung die Art und wenigstens einen Parameter der angeforderten Aktionsberechtigung angibt,
b) Überprüfung durch das Identifikationsmodul, ob für den Identifikationscode eine Aktionsberechtigung mit dem wenigstens einen Parameter zulässig ist, und für den Fall der Zulässigkeit:
c) Generierung eines Transaktionscodes für die angeforderte Aktionsberechtigung durch das Identifikationsmodul, wobei der Transaktionscode gegenüber wenigstens einer dritten Stelle, aufweisend das Terminal, eine Freigabe der Aktion mit dem wenigstens einen Parameter durch das Identifikationsmodul dokumentiert und wobei die Gültigkeit des Transaktionscodes zeitlich begrenzt ist,
d) Übersendung des Transaktionscodes von dem Identifikationsmodul an das Mobiltelefon,
e) Senden und/oder Eingabe einer Nachricht, aufweisend den Transaktionscode, von dem Benutzer des Mobiltelefons an das Terminal, wobei die Aktion, auf die sich Schritt a) bezieht, durch den Schritt e) terminiert wird.

Ein entsprechendes Verfahren ist bekannt aus der EP-A-1 160 744.

Die meisten Sicherheitssysteme im Zusammenhang mit Kreditkarten, Zahlkarten, Electronic-Banking oder Zutrittskontrollen für Räumlichkeiten oder auch Computer-Netzwerke beruhen auf statischen Daten, wie zum Beispiel Kreditkartennummern, Daten auf Magnetstreifen oder Chips, Fotos, Nummern einer Streichliste in gedruckter Form, Badge oder Token. Die damit verbundenen Risiken, beispielsweise bei Entwendung einer Kreditkarte sind offensichtlich und allgemein bekannt.

Sicherheitssysteme, die auf dynamischen Daten beruhen, werden beispielsweise bei Zutrittskontrollen, bei Netzwerkanmeldungen an einem Personal Computer oder beim E-Banking eingesetzt. Vorzugsweise werden hierfür Prozessoren verwendet, die in regelmäßigen zeitlichen Abständen mittels spezieller Algorithmen dynamisch Werte für Codenummern generieren. Diese werden dann bei einer Anmeldung oder einem Zutritt oder dergleichen mit Referenzwerten verglichen. Bei Übereinstimmung wird eine Freigabe ausgelöst.

Neben diesen bekannten "SecurID-Komponenten", wie sie beispielweise von "RSA Security" vertrieben werden, gibt es in letzter Zeit auch vermehrt PDAs, "Organizers" und dergleichen sowie Mobiltelefone, die in der Lage sind, derartige Funktionen wahrzunehmen.

Eine Unsicherheitskomponente ist in diesem Zusammenhang beim Stand der Technik, dass sicherheitsrelevante Daten, wie zum Beispiel die Nummer einer Kreditkarte an eine an der Aktion beteiligten Partei, beispielsweise dem Betreiber eines Supermarktes übermittelt werden müssen. Beispielsweise werden sicherheitsrelevante Daten einer Kreditkarte von einem Lesegerät an einem Zahlungsterminal erfasst, um eine Transaktion zu initialisieren. Dabei werden die sicherheitsrelevanten Daten übermittelt, kontrolliert, freigegeben und die Zahlungsaktion terminiert. Die Daten auf der verwendeten Kreditkarte sind statisch. Sie werden auf dem Beleg, der zur Unterschrift vorgelegt wird, mehr oder weniger ungeschützt ausgewiesen.

Einige Unternehmen sind dazu übergegangen, die letzten vier Ziffern beim Ausdruck auf dem Beleg zu trunkieren. Dennoch können missbräuchliche Anwendungen nicht ausgeschlossen werden, sofern die Karte dem Vertragspartner vorübergehend zugänglich gemacht wird.

Bezüglich der Benutzung von Geldautomaten besteht die Gefahr von Manipulationen an diesen Automaten. Außerhalb von Geschäftszeiten sehen Banken deshalb einen Zugang zu Geldautomaten in Vorräumen mitunter nur für Inhaber einer Bank- oder Kreditkarte vor.

Der vorliegenden Erfindung liegt die Aufgabe zugrunde, eine Technik bereitzustellen, welche einerseits dem Benutzer eines Mobilterminals, insbesondere eines Mobiltelefons, die Möglichkeit verschafft, auch ohne Bank- oder Kreditkarte sich zu identifizieren und Zugang zu einem Geldautomaten zu erhalten und eine Auszahlung am Geldautomaten zu veranlassen, wobei bei einfacher Handhabung besonders hohe Sicherheit gewährleistet ist.

Diese Aufgabe wird erfindungsgemäß durch die Merkmale der unabhängigen Ansprüche gelöst. Die abhängigen Ansprüche bilden den zentralen Gedanken der Erfindung in besonders vorteilhafter Weise weiter.

Gemäß der Erfindung wird ein Benutzer eines Mobilterminals, insbesondere eines Mobiltelefons, PDA's oder dergleichen zunächst identifiziert. Anschließend wird für ihn eine Berechtigung für die Ausführung einer Aktion erzeugt, konkret der Zugang zu einem Geldautomaten und die Auszahlung eines Geldbetrages.

Dabei wird in einem ersten Schritt durch den Benutzer des Mobilterminals von dem Mobilterminal über eine Luftschnittstelle - beispielsweise mittels einer "Short Message Service" (SMS)-Nachricht eine Anforderung für eine Aktionsberechtigung an ein Identifikationsmodul gesendet. Das Identifikationsmodul ist dabei von dem Benutzer, respektive Betreiber unabhängig. Zusammen mit der Anforderung wird ein Identifikationscode des Mobilterminals an den Idenfikationsserver gesendet. Durch die gesendeten Daten ist es möglich, dass vom Identifikationsmodul der Benutzer identifiziert wird.

In einem folgenden Schritt wird von dem Identifikationsmodul ein Aktionscode erzeugt und dieser an das Mobilterminal gesendet. Der Aktionscode stellt für den Benutzer des Mobilterminals eine Berechtigung zur Durchführung einer Aktion dar.

Der Aktionscode besitzt eine zeitlich begrenzte Gültigkeit Die Dauer der zeitlichen Begrenzung kann dabei je nach spezieller Anforderung, die durch die betreffende Aktion gegeben sind, gewählt werden.

Vorteilhaft ist dabei eine mehrmalige Gültigkeit des Aktionscodes, nämlich einmal für den Zugang zu einem Geldautomaten und einmal für die Auszahlung eines Geldbetrages, wobei allerdings vorteilhaft die maximale Anzahl der Aktionsberechtigungen pro Aktionscode beschränkt ist. Dadurch wird eine besonders hohe Sicherheit bei der Vergabe einer Aktionsberechtigung erzielt.

Durch die zeitliche Begrenzung der Gültigkeit des Aktionscodes wird eine besonders hohe Sicherheit erzielt. Die Möglichkeit einer Entschlüsselung besteht zwar prinzipiell, aber bei geeignet gewählter zeitlicher Begrenzung kann eine Entschlüsselung innerhalb dieser vorgegebenen Zeitspanne so gut wie ausgeschlossen werden. Ebenso wenig ist die Zuordnung eines solchen Aktionscodes machbar, da die Applikation respektive die involvierten Parteien nicht bekannt sind.

Weiterhin wird die Sicherheit dadurch erhöht, dass der Benutzer des Mobilterminals zusätzlich mit der Anforderung eine persönliche Identifikationsnummer (PIN) sendet und diese von dem Identifikationsmodul bei der Identifizierung des Benutzers mitberücksichtigt wird.

Außerdem kann eine Erhöhung der Sicherheit dadurch erzielt werden, dass die Kommunikation zwischen dem Mobilterminal und dem Identifikationsserver - wenigstens teilweise - in verschlüsselter Form durchgeführt wird.

Weiterhin ist es vorteilhaft, wenn die Kommunikation zwischen dem Mobilterminal und dem Identifikationsmodul zumindest teilweise mittels eines Datenkanals, wie zum Beispiel mittels einer SMS-Nachricht des GSM-Standards erfolgt. Dadurch werden keine Nutzkanäle belegt. Außerdem ist dies aufgrund der weiten Verbreitung des SMS-Dienstes günstig. Schließlich ist ein derartiger Datenkanal auch störungssicherer als ein Nutz- beziehungsweise Sprachkanal.

Auch ist es vorteilhaft, wenn zur Kommunikation zwischen dem Mobilterminal und dem Identifikationsmodul Daten verwendet werden, die aus einem Datenträger oder Speicher, beispielsweise in Form einer "Subscriber Identity Module" (SIM) Karte in dem Mobilterminal ausgelesen werden.

Insbesondere können als weitere Sicherheitsmassnahme bei der Sendung von dem Mobilterminal zu dem Identifikationsmodul Netzwerkinformationenmit übermittelt werden. Beispielsweise bietet es sich an, dass Angaben über den betreffenden Provider und/oder die verwendete Mobilfunkzelle mitgesendet werden.

Wird beispielsweise von dem Benutzer eine Zahlung an einem Zahlungsterminal angefordert, kann von dem Identifikationsmodul sicherheitshalber überprüft werden, ob sich das betreffende Zahlungsterminal im Raum derjenigen Mobilfunkzelle befindet, von der aus die Anforderung von dem Benutzer gesendet wurde.

Den Empfang des Aktionscodes durch das Mobilterminal betreffend, kann es vorteilhaft sein, wenn der Aktionscode auf dem Display des Mobilterminals angezeigt wird, aber nicht auf einem Datenträger, beispielsweise auf einer SIM-Karte des Mobilterminals gespeichert wird. Hierdurch ist späteres missbräuchliches Lesen des Aktionscodes ausgeschlossen.

Allerdings kann es auch Vorteile bringen, wenn bestimmte anderweitige Daten, die die Aktion betreffen, auf einem Datenträger des Mobilterminals gespeichert werden. Damit ist es möglich, die Daten später abrufbereit zur Verfügung zu haben und beispielsweise auch auf ein anderes Gerät - zum Beispiel einen PC - übertragen zu können. Beispielsweise kann es sich bei diesen Daten um den Betrag einer Zahlung handeln oder - im Falle einer Bargeldabhebung von einem Geldautomaten - um den abgehobenen Betrag, um die Kenn-Nummer des verwendeten Geldautomaten oder um den Zeitpunkt der Bargeld-Abhebung.

Weiterhin kann bei dem erfindungsgemäßen Verfahren von dem Identifikationsmodul der Aktionscode außer an das Mobilterminal auch noch an ein Terminal einer dritten Stelle beziehungsweise Partei gesendet werden. Vorteilhaft wird dabei zusätzlich eine dem Benutzer bekannte Identifikationsnummer mitgesendet.

Besonders vorteilhaft ist es, wenn die Kommunikation zwischen dem Identifikationsmodul und dem Terminal ebenfalls über eine Luftschnittstelle erfolgt. Hierdurch ist es möglich, ein Terminal auch ohne Verfügbarkeit von festen Kommunikationsleitungen am Ort des Terminals für das erfindungsgemäße Verfahren einzusetzen.

Auch kann bei dieser Kommunikation eine Verschlüsselung zur Erhöhung der Sicherheit weiterhin vorteilhaft sein.

Insbesondere bietet sich wiederum an, die Kommunikation über einen Datenkanal zu übermitteln. Es ist heute beispielsweise leicht realisierbar, GSM-fähige und serverseitig ansteuerbare Zahlungsterminals zu produzieren.

Allgemein formuliert ist es gemäß dem erfindungsgemäßen Verfahren vorteilhaft, wenn mittels des Terminals der dritten Partei Vorgänge auslösbar sind, die zur Durchführung der betreffenden Aktion nötig sind.

Ein Beispiel für ein Terminal der dritten Partei ist ein GSM-fähiges Terminal, das mit einer verschließbaren Türe in Verbindung steht, so dass über das Terminal die Türe geöffnet werden kann.

Die Terminierung kann dadurch erfolgen, dass von dem Benutzer die oben genannte Identifikationsnummer direkt am Terminal der dritten Partei eingegeben wird. Da im Terminal die für die Aktion gültige identifikationsnummer vorliegt, kann die Eingabe daraufhin kontrolliert werden und bei Übereinstimmung die Aktion terminiert werden.

Gemäß dem erfindungsgemäßen Verfahren kann alternativ in einem weiteren Schritt von dem Mobilterminal eine Nachricht, die beispielsweise die Identifikationsnummer beinhaltet, an das Identifikationsmodul gesendet werden. Das Verfahren kann so gestaltet sein, dass durch die Übermittlung dieser Nachricht die Aktion terminiert wird.

Die Terminierung erfolgt in diesem Fall dadurch, dass von dem Identifikationsmodul das Terminal der dritten Partei entsprechend angesteuert wird.

Weiterhin alternativ kann die Terminierung dadurch realisiert werden, dass von dem Mobilterminal eine Nachricht direkt an das Terminal gesendet wird. Diese Nachricht beinhaltet wiederum beispielsweise die zuvor vom Identifikationsmodul an das Terminal gesendete Identifikationsnummer. Dadurch wird die Sicherheit weiterhin signifikant erhöht.

Selbstverständlich kann auch die Kommunikation zwischen dem Mobilterminal und dem Terminal über eine Luftschnittstelle, in verschlüsselter Form und über einen Datenkanal erfolgen.

Für einen weiteren Einsatzbereich des erfindungsgemäßen Verfahrens kann es vorteilhaft sein, dass alternativ zum letztgenannten Schritt der Aktionscode durch den Benutzer des Mobilterminals auf andere Weise verwendet werden kann.

Der Aktionscode kann unmittelbar oder mittelbar als Passwort dienen. Auf diese Weise lässt sich eine "virtuelle Zugangskontrolle" verwirklichen.

Besonders vorteilhaft eignet sich das Verfahren zur Abwicklung von Zahlungsvorgängen. In diesem Fall handelt es sich bei dem Terminal allgemein formuliert um ein "Zahlungsterminal". Der Aktionscode ist speziell in diesem Fall treffender als "Transaktionscode" zu bezeichnen.

Allerdings kann das erfindungsgemäße Verfahren auch für Transaktionen verwendet werden, für die keine Zahlungsterminals nötig sind, beispielsweise zum Aufladen einer "Prepaid-Karte".

Selbstverständlich müssen im Identifikationsmodul die für die betreffende Zahlung relevanten Daten des beteiligten Geldinstituts zur Verfügung stehen, beispielsweise in Form einer Kreditkartennummer mit Verfallsdatum und eines dazugehörenden Kreditrahmens des Benutzers.

Dies kann beispielsweise dadurch realisiert sein, dass das Identifikationsmodul mit einer entsprechenden Datenbank des betreffenden Geldinstituts verbunden ist.

Vom Benutzer des Mobilterminals kann beispielsweise in diesem Fall zusammen mit der Anforderung für die Zahlungsabwicklung die Nummer der verwendeten Kreditkarte (oder sonstigen geeigneten Karte) und das Verfallsdatum mitgesendet werden.

Insbesondere kann dabei vorteilhaft vom Benutzer ein maximaler Betrag für den angeforderten Zahlungsvorgang als "Zahlungsrahmen" mitgesendet werden. Dieser Zahlungsrahmen dient dann als Obergrenze für den tatsächlichen Betrag des Zahlungsvorgangs.

Außerdem wird eine Kenn-Nummer des Zahlungsterminals mitgesendet, an dem die Zahlung erfolgen soll. Vorteilhaft wird dabei bei Anwendung des erfindungsgemäßen Verfahrens auf mehrere Zahlungsterminals jeweils eine eindeutige Zuordnung einer Kenn-Nummer zu einem Zahlungsterminal verwendet.

Als weitere Sicherheitsmassnahme kann gefordert werden, dass die Anforderung von dem Benutzer durch die Übersendung einer persönlichen Identifikationsnummer an das Identifikationsmodul bestätigt werden muss.

Im Identifikationsmodul werden die übermittelten Angaben unter Berücksichtigung der von dem betreffenden Geldinstitut zur Verfügung gestellten Daten nach Empfang der Anforderung überprüft.

Insbesondere kann dabei ein gegebenenfalls mitgesendeter Zahlungsrahmen auf Gültigkeit überprüft werden.

Bei passender Übereinstimmung und Plausibilität der empfangenen Daten wird dann vom Identifikationsmodul der Transaktionscode generiert. Dieser ist vorteilhaft nur einmal gültig und zudem nur zeitlich begrenzt gültig.

Anschließend wird vom Identifikationsmodul der Transaktionscode einerseits an das Mobilterminal und andererseits an das Zahlungsterminal gesendet. Es bietet sich selbstverständlich an, in diesem Schritt Angaben über die zeitliche Gültigkeit mitzusenden.

Insbesondere kann auch gegebenenfalls der Zahlungsrahmen von dem Identifikationsmodul an das Zahlungsterminal gesendet werden.

Außerdem wird an das Zahlungsterminal eine Identifikationsnummer gesendet, die dem Benutzer des Mobilterminals bekannt ist

Zur Terminierung des Zahlungsvorganges wird dann vom Benutzer die an das Zahlungsterminal gesendete Identifikationsnummer - beispielsweise zusammen mit dem Zahlungsbetrag - an das Zahlungsterminal übermittelt.

Dies kann beispielsweise durch direkte Eingabe der Identifikationsnummer durch den Benutzer über eine Tastatur in das Zahlungsterminal erfolgen.

Alternativ ist eine Übersendung der Identifikationsnummer beispielsweise mittels des Mobilterminals an das Zahlungsterminal möglich.

Die Verwendung der Angabe eines Zahlungsrahmens bietet den entscheidenden Vorteil, dass der eigentliche Zahlungsvorgang prinzipiell wesentlich schneller als nach dem Stand der Technik erfolgen kann: Die Überprüfung des Zahlungsrahmens, die notwendigerweise eine gewisse Zeit beansprucht, kann vor der Terminierung - als Vorautorisierung - also vor dem eigentlichen Zahlungsvorgang erfolgen. Bei Gültigkeit des Zahlungsrahmens erfolgt die eigentliche Zahlung dann einfach und schnell durch Eingabe der Identifikationsnummer durch den Benutzer.

Beispielsweise kann an einem Zahlungsterminal, an dem sich eine Warteschlange gebildet hat, der Zahlungsrahmen bereits während der Wartezeit des Benutzers in der Warteschlange überprüft werden.

Erwähnenswert ist ferner, dass auf diese Weise dem Zahlungsempfänger keine sensitiven Daten, wie zum Beispiel die Kreditkartennummer und das Verfallsdatum der Kreditkarte zur Verfügung gestellt werden. Der Zahlungsempfänger erhält nur den Transaktionscode und die Identifikationsnummer.

Dieser Transaktionscode kann auch auf einem ausgedruckten und gegebenenfalls zu unterschreibenden Zahlungsbeleg erscheinen. Allerdings ist er in der Folge nicht mehr missbräuchlich nutzbar. Ein diesbezüglicher Missbrauch durch den Zahlungsempfänger ist somit - gegenüber dem derzeit üblichen Verfahren - ausgeschlossen.

Weitere Merkmale, Vorteile und Eigenschaften sollen nunmehr anhand einer detaillierten Beschreibung von Ausführungsbeispielen und bezugnehmend auf die Figuren der beigefügten Zeichnungen erläutert werden. Es zeigen:
Fig. 1 : Grundlegendes Ablaufschema des erfindungsgemäßen Verfahrens;
Fig. 2 : Datenflussplan - Grundmodul;
Fig. 3 : Datenflussplan - Öffnung einer Zugangsschleuse;;;
Fig. 4 : Datenflussplan - Bargeldbezug am Geldautomaten;

Die Verwendung der Bezugszeichen ist im Folgenden durchgängig.

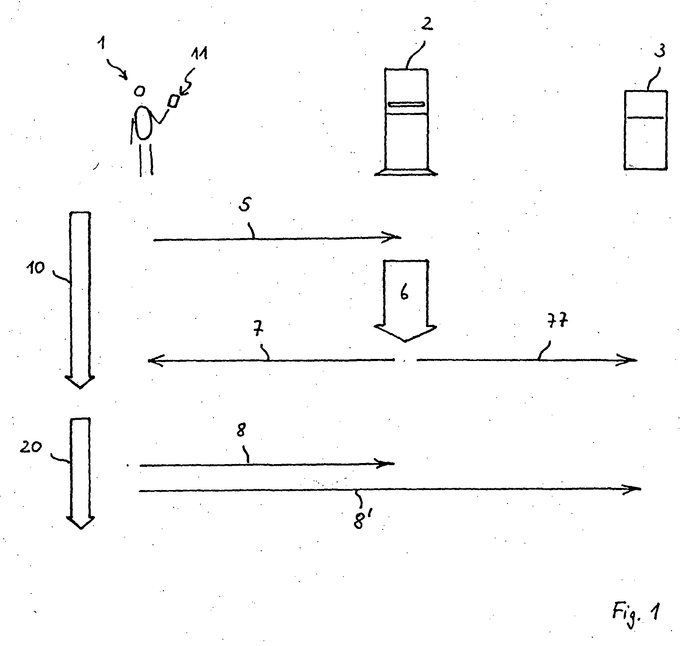

Fig. 1 zeigt schematisch die zeitliche Abfolge des erfindungsgemäßen Verfahrens. Dabei ist ein Benutzer 1 eines Mobilterminals, hier in Form eines Mobiltelefons 11, ein Identifikationsmodul 2 und in der Regel ein Terminal 3 einer dritten Stelle beziehungsweise Partei beteiligt.

Insgesamt betrachtet lässt sich das Verfahren in der Regel in zwei Abschnitte untergliedern: eine "Vorautorisierung" 10 und eine "Terminierung" 20.

### Vorautorisierung->

Bei der Vorautorisierung 10 fordert in einem ersten Schritt 5 der Benutzer 1 des Mobiltelefons 11 über Menü-Steuerung bei dem Identifikationsmodul 2 einen Aktionscode an. Dieser wird im folgenden der Einfachheit halber mit TRX in Anlehnung an das Wort "Transaktionscode" bezeichnet.

Zusammen mit dieser Anforderung werden außerdem im allgemeinen weitere aktionsspezifische Angaben übermittelt.

Beispielsweise kann mitgeteilt werden, auf welche Aktion sich der TRX beziehen soll. Beispiele für diese Aktionen sind:
Durchgang des Benutzers 1 durch eine kontrollierte Türe oder Schranke.

Außerdem kann die Anforderungs-Nachricht Angaben enthalten, die ein gegebenenfalls In die Aktion eingebundenes Terminal 3 betreffen. Beispielsweise kann es sich dabei um die Kenn-Nummer eines Geldautomaten handeln.

Je nach Aktion werden bei Schritt 5 außerdem weitere aktionsrelevante Daten übermittelt, wie beispielsweise Angaben über die benutzte SIM-Karte, beispielsweise In Form des "Integrated Circuit Card Identifier" (ICCID), eine PIN-Nummer des Benutzers, Angaben über die verwendete Mobilfunkzelle - "Cell Idendfication" (Cell ID), Angaben über einen Zahlungsrahmen etc.

Die Anforderung 5 erfolgt beispielsweise mittels des SMS-Dienstes über ein Telekommunikationsnetz eines Mobilfunk-Netzbetreibers nach dem GSM Standard. Durch den entsprechenden Netzprovider wird die Nachricht - via SMS-Center - an das Identifikationsmodul 2 drahtlos übermittelt.

Besonders sicher ist es dabei, wenn die Sendung wenigstens teilweise verschlüsselt erfolgt. Dies kann beispielsweise unter Nutzung von "Triple Data Encryption Standard" (3DES) erfolgen.

In einem zweiten Schritt 6 wird in dem Identifikationsmodul 2 die Anforderung des Benutzers 1 registriert und die in der Anforderung 5 übermittelten Daten werden überprüft.

Hierzu stehen beispielsweise bei einem Zahlungsvorgang im Identifikationsmodul Daten des beteiligten Geldinstituts zur Verfügung, die für die betreffende Zahlung relevant sind. Hierbei kann es sich beispielsweise um eine Kreditkartennummer des Benutzers 1 mit Verfallsdatum der Kreditkarte handeln oder um einen entsprechenden zur Verfügung stehenden Kreditrahmen.

Auch kann hierzu beispielsweise von dem Identifikationsmodul der Standort des betreffenden Zahlungsterminals mit dem Raum der Mobilfunkzelle, von der aus die Anforderung erfolgte, verglichen werden.

Bei Gültigkeit der übermittelten Daten wird daraufhin von dem Identifikationsmodul 2 - genauer gesagt durch einen Server des Identifikationsmoduls 2 - ein einmal gültiger TRX generiert, der mit einer Zeitbeschränkung versehen ist. Die Zeitbeschränkung kann dabei beliebig fixiert sein. Die Dauer der Zeitbeschränkung ist zweckmäßigerweise in Abhängigkeit der Aktion gewählt.

Die Dauer der Zeitbeschränkung hängt dabei unmittelbar mit der Sicherheit zusammen, da die Chance einer missbräuchlichen Entschlüsselung mit der Dauer der Gültigkeit prinzipiell wächst. Daher soll die Dauer der Gültigkeit sicherheitshalber auf ein adäquates Minimum reduziert sein.

Auf diese Weise ist es möglich, einen diesbezüglichen Missbrauch praktisch auszuschließen. In einem weiteren Schritt 7 wird dann der so generierte TRX an den Benutzer 1 des Mobiltelefons 11 übermittelt.

Mit der Übersendung der TRX an den Benutzer 1 ist das "Kernelement" der Erfindung abgeschlossen, denn der TRX stellt eine Aktionsberechtigung für den Benutzer 1 dar.

Allerdings sind für die meisten der hier dargestellten Beispiele weitere Schritte vorteilhaft und daher im Folgenden näher beschrieben.

Bei den meisten der hier beschriebenen Anwendungen wird der TRX außerdem beispielsweise mittels einer SMS-Nachricht an ein Terminal 3 einer dritten, an der Aktion beteiligten Partei gesendet 77.
Bei dieser dritten Partei kann es sich beispielsweise handeln um
ein Terminal 3, das mit einer Zutrittsschleuse verbunden ist,
ein Zahlungsterminal 3 für Kredit- und Debitkarten,
ein Terminal 3 eines Geldinstituts, das mit einem Geldautomaten für Bargeldbezug verbunden ist,

In Fig. 1 ist schematisch als Repräsentant für die dritte Partei ein Terminal 3 dargestellt.

Die Übermittlung an das Terminal 3 der dritten Partei kann wiederum über eine Luftschnittstelle erfolgen. Beispielsweise kann ein Zahlungsterminal 3 der dritten Partei über ein GSM-Modul ansteuerbar sein.

Auch bei der Übermittlung 77 kann wiederum durch eine Verschlüsselung der übermittelten Nachricht die Sicherheit weiter erhöht werden.

Als zusätzliche Sicherheitseinrichtung kann bei Schritt 77 eine Identifikationsnummer, beispielsweise in Form einer "Applikations-PIN", übermittelt werden, durch den die Provenienz des TRX vom Identifikationsmodul 2 bestätigt wird. Diese Applikations-PIN ist dem Benutzer 1 bekannt. Hierauf wird weiter unten noch näher eingegangen.

Damit ist die Vorautorisierung abgeschlossen.

### Terminierung

Die Terminierung kann auf unterschiedliche Arten (i), (ii), (iii) erfolgen:
(i) Falls am Terminal 3 die betreffende Applikations-PIN vorliegt, besteht eine Möglichkeit darin, dass vom Benutzer 1 die betreffende Applikations-PIN zur Terminierung 20 direkt am Terminal 3 der dritten Partei - beispielsweise über eine Tastatur - eingegeben wird.
(ii) Alternativ wird zur Terminierung 20 von dem Benutzer 1 des Mobiltelefons 11 eine Nachricht an das identifikationsmodul 2 gesendet 8. Dabei kann es sich beispielsweise um die betreffende Applikations-PIN handeln. Es ist allerdings auch möglich, hierfür eine andere, zwischen dem Benutzer 1 des Mobiltelefons 11 und dem Betreiber des Identifikationsmoduls 2 speziell vereinbarte Nachricht zu verwenden.

Im Identifikationsmodul 2 wird daraufhin die empfangene Nachricht auf Richtigkeit beziehungsweise Gültigkeit geprüft.

Im Fall der Gültigkeit wird dann seitens des Identifikationsmoduls 2 mittels Nachrichtenübermittlung an das Terminal 3 der dritten Partel die Aktionsberechtigung aktiviert und die vom Benutzer 1 mittels Mobiltelefon 11 angeforderte Aktion kann erfolgen.

Die Nachrichtenübermittlung von dem Identifikationsmodul 2 an die weitere Partei 3 kann dabei wiederum über eine Luftschnittstelle erfolgen. Beispielsweise kann das Terminal 3 der dritten Partei von dem Identifikationsmodul 2 über ein GSM-Modul angesteuert werden.

Mit dieser Nachricht wird seitens des Mobiltelefons 11 das Verfahren terminiert und dadurch die Aktionsberechtigung aktiviert.
(iil) Schließlich ist es auch möglich, dass zur Terminierung von dem Benutzer 1 des Mobiltelefons 11 eine Nachricht 8' direkt an das Terminal 3 der dritten Partei gesendet wird. Diese Nachricht beinhaltet neben der TRX wiederum eine weitere Nachricht, beispielsweise wieder in Form der "Applikations-PIN", die zwischen dem Benutzer 1 des Mobiltelefons 11 und der dritten Partei 3, beispielsweise einem "Applikationsbetreiber", speziell hierfür vereinbart ist.

Insbesondere kann das Verfahren so gestaltet sein, dass die "Applikations-PIN" - wie oben dargestellt - bei der Vorautorisierung 10 vom Identifikationsmodul 2 zusammen mit dem TRX an das Terminal 3 der dritten Partei gesendet 77 wird und somit am Terminal 3 vorliegt.

Durch die Terminierung 20 können beispielsweise folgende Vorgänge ausgelöst werden: Eine Zugangstüre öffnet sich,

Ein Zahlungsvorgang mit einer Kredit- oder Debitkarte erfolgt,

Ein Geldautomat gibt Geld aus,

Die Übertragung der Nachricht 8' muss nicht ausschließlich mittels des Mobiltelefons 11 erfolgen. Sie kann beispielsweise alternativ dazu von einem PC des Benutzers 1 über das Internet auf einen Server, der als Terminal 3 eines Applikationsbetreibers fungiert, übermittelt werden. Beispielsweise kann es sich dabei um eine Nachricht nach dem "File Transfer Protocol' (FTP) handeln.

Die Nachricht 8' kann auch als Passwort-Angabe eingesetzt werden.

Auf jeden Fall wird bei der Terminierung 20 durch den Benutzer 1 die Aktionsberechtigung aktiviert und der vom Benutzer 1 gewünschte beziehungsweise angeforderte Vorgang kann durchgeführt werden.

Ein weiteres Beispiel für einen Applikationsbetreiber ist eine Bank.

Vorteilhaft an dem angegebenen Verfahren ist dabei insbesondere, dass an die weitere Partei keine sicherheitsrelevanten Daten des Benutzers 1 geleitet werden müssen. So ist es nicht nötig, dass beispielsweise die für die Transaktion verwendete Kreditkartennummer dem Zahlungsempfänger übermittelt wird.

Möglich ist auch der Fall, dass der Betreiber des Identifikationsmoduls 2 und die dritte Partei 3 identisch sind. In diesem Fall erübrigt sich offensichtlich die durch Schritt 77 dargestellte Übermittlung der TRX von dem Identifikationsmodul 2 an die dritte Partei 3.

Im allgemeinen ist jedoch das Identifikationsmodul 2 von der dritten Partei unabhängig.

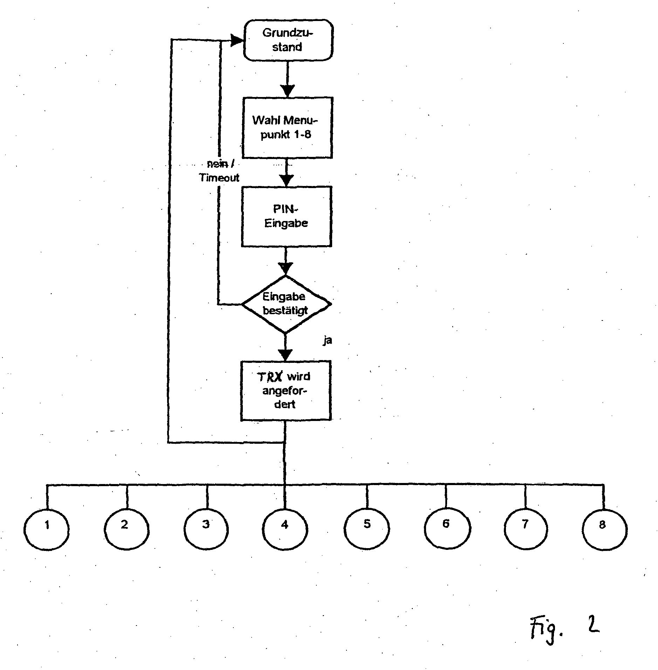

In den Figuren 2 bis 4 sind erfindungsgemäße Datenflusspläne für Abläufe aus Sicht des Benutzers 1 eines Mobiltelefons 11 dargestellt. In diesem Ausführungsbeispiel wird das Verfahren auf mehrere Module angewendet, die sich jeweils auf verschiedene Aktionstypen beziehen.

Fig. 2 zeigt das Grundmodul. In einem Grundzustand wird dabei mittels Menü-Steuerung eines von acht Auswahl-Modulen angewählt. Dabei steht jedes Modul für einen speziellen Aktionstyp. In der folgenden Tabelle sind die Module und die entsprechenden Aktionstypen einander zugeordnet dargestellt:
Modul Nummer Aktionstyp
   - 1: Öffnung einer Zugangsschleuse
   - 2: Bargeldbezug am Geldautomaten

Die Eingabe des ausgewählten Moduls wird mit einer PIN durch den Benutzer 1 bestätigt.

Selbstverständlich muss das Mobiltelefon 11 des Benutzers 1 vorab entsprechend programmiert sein. Dies ist mit heute verfügbaren SIM-Karten möglich.

Beispielsweise kann das Menü des Mobiltelefons 11 hierfür so eingerichtet werden, dass ein Menüpunkt "Konfiguration" mit einem Unter-Menüpunkt "Neuer Service" anwählbar ist. Über diesen können dann die verschiedenen Module für unterschiedliche Aktionstypen - wie beispielsweise die oben in der Tabelle genannten - durch den Benutzer 1 eingerichtet werden.

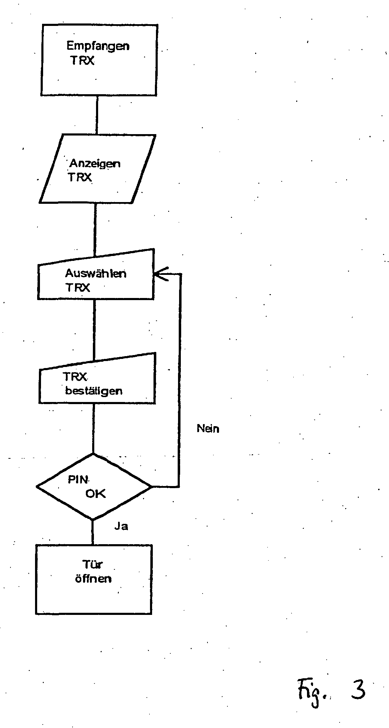

Fig. 3 zeigt den Ablauf im Fall einer Zugangsschleuse nach Auswahl von Modul Nummer Eins.

Nach Empfang des TRX mittels SMS-Nachricht wird dieser dem Benutzer 1 am Bildschirm des Mobiltelefons 11 angezeigt. An der betreffenden Türe wird der TRX ebenfalls bereitgestellt.

Der Benutzer 1 wählt mittels Menü auf seinem Mobiltelefon 11 den empfangenen TRX aus und bestätigt diesen durch Eingabe der betreffenden Applikations-PIN.

Dies wird dann - wiederum per SMS-Nachricht - an das Identifikationsmodul 2 gesendet Dort werden die Daten überprüft und bei Gültigkeit wird von dem Identifikationsmodul 2 über eine GSM-Schnittstelle an ein Terminal 3, das mit der Türe verbunden ist, eine Nachricht gesendet, die wiederum ein Öffnen der Türe aktiviert.

Bei Eingabe von falschen Daten durch den Benutzer schaltet das Mobiltelefon automatisch in den Zustand zurück, in dem der TRX ausgewählt werden kann.

Alternativ kann die Applikations-PIN von dem Identifikationsmodul 2 an das Terminal 3 gesendet werden. In diesem Fall kann die Terminierung 20 dadurch erfolgen, dass der Benutzer 1 die Applikations-PIN direkt an das Terminal 3 sendet und dadurch die Öffnung der Türe ausgelöst wird.

Auch ist es möglich, dass in diesem Fall zur Terminierung der Benutzer 1 die entsprechende Applikations-PIN direkt - beispielsweise mittels einer Tastatur - in das Terminal eingibt.

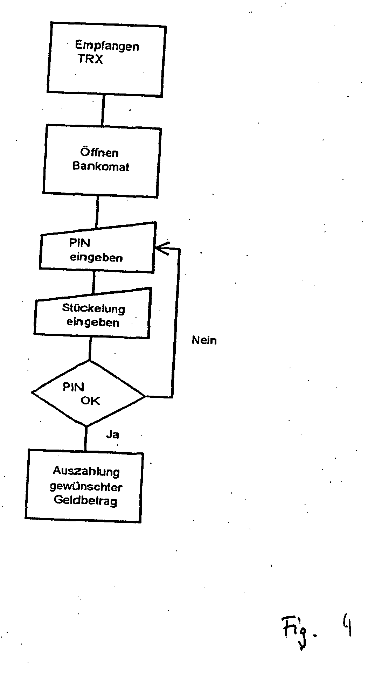

Fig. 4 zeigt den Ablauf im Fall von Modul Zwei, Bargeldauszahlung am Geldautomaten.

In diesem Fall wird zusammen mit der Anforderung 5 die Kenn-Nummer des betreffenden Geldautomaten gesendet

Nach Empfang des TRX mittels SMS-Nachricht öffnet sich der Zugang zum Geldautomaten automatisch. Daraufhin bestätigt der Benutzer 1 den bereitstehenden TRX mittels Eingabe einer Applikations-PIN - beispielsweise direkt an der Tastatur des Geldautomaten.

Anschließend kann die gewünschte Stückelung eingegeben werden.

Bei korrekter Eingabe wird der gewünschte Geldbetrag ausbezahlt.

Als weitere Sicherheitseinrichtung kann vorgesehen sein, dass eine weitere PIN direkt an der Tastatur des Geldautomaten einzugeben ist.

Die Vorteile des erfindungsgemäßen Verfahren lassen sich wie folgt zusammenfassen: An die weitere Partei, die neben dem Benutzer an der Aktion beteiligt ist, werden keine sicherheitsrelevanten Daten des Benutzers geleitet. Dennoch kann die Aktion unter besonders hoher Sicherheit durchgeführt werden.

Durch einen TRX, der einerseits zeitlich limitiert ist und andererseits nur begrenzt oft gültig ist, wird der Sicherheitsfaktor entscheidend erhöht.

Der Ablauf einer Aktion kann durch die erfindungsgemäße Untergliederung des Verfahrens in "Vorautorisierung" und "Terminierung" beschleunigt werden, denn eine Zahlungsaktion kann bereits initialisiert werden, bevor an einem Zahlungsterminal der entsprechende Zahlungsbetrag vorliegt.

Es sind sehr viele unterschiedliche Terminaltypen erfindungsgemäß ansteuerbar, da die Ansteuerung über eine Luftschnittstelle erfolgt.

Bei der Durchführung einer Wahl kann durch die ortsunabhängige und zeitlich besonders flexible Gestaltungsmöglichkeit einer Stimmabgabe eine Zunahme der Wahl- beziehungsweise Abstimmungsbeteiligung erwartet werden.

Ein modularer Aufbau erlaubt eine sehr bedienerfreundliche Anwendung des Verfahrens, wobei die Anwendung auf sehr unterschiedliche Aktionstypen möglich ist.

### Bezugszeichenliste

1 : Benutzer eines Mobilterminals / Mobiltelefons
2 : Identifikationsmodul
3 : Terminal der dritten Partel
5 : Anforderung einer TRX durch den Benutzer
6 : Generierung einer TRX
7 : Übersendung der TRX an das Mobilterminal
8 **:** Übersendung der TRX und einer PIN an das Identifikationsmodul
8' Übersendung der TRX und einer PIN an das Terminal der dritten Partei
10 : Vorautorisierung
11 : Mobilterminal / Mobiltelefon
20: Terminierung
77 : Übersendung der TRX an das Terminal der dritten Partei
80 : Terminierung des Download-Teils

## Patentansprüche

1. Verfahren zur Abwicklung eines Auszahlungsvorganges zwischen einem Benutzer(1) eines Mobiltelefons (11) unter Zuhilfenahme des Mobiltelefons (11), eines Identifikationsmoduls (2) und eines Terminals (3) eines Geldautomaten, aufweisend die folgenden Schritte:
a) Übersendung (5) einer Aktionsberechtigungs-Anforderung für den Auszahlungsvorgang zusammen mit einem Identifikationscode von dem Mobiltelefon (11) und einer Kennnummer des betreffenden Geldautomaten an das Identifikationsmodul (2), wobei die Aktionsberechtigungs-Anforderung die Art und wenigstens einen Parameter der angeforderten Aktionsberechtigung angibt,
b) Überprüfung durch das Identifikationsmodul (2), ob für den Identifikationscode eine Aktionsberechtigung mit dem wenigstens einen Parameter zulässig ist, und für den Fall der Zulässigkeit:
c) Generierung (6) eines Transaktionscodes für die angeforderte Aktionsberechtigung durch das Identiflkationsmodul (2), wobei der Transaktionscode gegenüber wenigstens einer dritten Stelle, aufweisend das Terminal (3), eine Freigabe der Aktion mit dem wenigstens einen Parameter durch das Identifikationsmodul (2) dokumentiert und wobei die Gültigkeit des Transaktionscodes zeitlich begrenzt ist,
d) Übersendung (7, 77) des Transaktionscodes von dem Identifikationsmodul (2) an das Mobiltelefon (11),
e) Senden und/oder Eingabe einer Nachricht (8'), aufweisend den Transaktionscode, von dem Benutzer (1) des Mobiltelefons (11) an das Terminal (3), wobei die Aktion, auf die sich Schritt a) bezieht, durch den Schritt e) terminiertwird, **dadurch gekennzeichnet, dass** bei Schritt d) zusätzlich der Transaktionscode von dem Identifikationsmodul (2) an das Terminal (3) übersandt (7, 77) wird, wobei der Transaktionscode dem Terminal (3) gegenüber anzeigt, dass der identifizierte Benutzer zur Ausführung des durch den Parameter spezifizierten Auszahlungsvorgang berechtigt ist und durch das Terminal (3) in Schritt e) ein Zugang zum Geldautomaten möglich gemacht wird.

2. Verfahren nach Anspruch 1, **dadurch gekennzeichnet, dass** die maximale Anzahl der Aktionsberechtigungen für die der Transaktionscode gültig ist, beschränkt ist.

3. Verfahren nach Anspruch 1 oder 2, **dadurch gekennzeichnet, dass** bei Schritt a) zusätzlich eine persönliche Identifikationsnummer des Benutzers (1) von dem Mobiltelefon (11) an das Identifikationsmodul (2) gesendet wird.

4. Verfahren nach einem der Ansprüche 1 bis 3, **dadurch gekennzeichnet, dass** die Kommunikation zwischen dem Mobiltelefon (11) und dem Identifikationsmodul (2) wenigstens teilweise verschlüsselt erfolgt.

5. Verfahren nach einem der Ansprüche 1 bis 4, **dadurch gekennzeichnet, dass** die Kommunikation zwischen dem Mobiltelefon (11) und dem Identifikationsmodul (2) wenigstens teilweise mittels eines Datenkanals, wie zum Beispiel einer .SMS-Nachricht des GSM-Standards erfolgt.

6. Verfahren nach einem der Ansprüche 1 bis 5, **dadurch gekennzeichnet, dass** bei der Kommunikation zwischen dem Mobiltelefon (11) und dem Identifikationsmodul (2) aus einem Datenträger in dem Mobiltelefon (11) ausgelesene Daten verwendet werden.

7. Verfahren nach Anspruch 6, **dadurch gekennzeichnet, dass** es sich bei dem Datenträger um eine in das Mobiltelefon (11) eingesetzte Karte mit Speicherfunktion handelt.

8. Verfahren nach Anspruch 7, **dadurch gekennzeichnet, dass** der Datenträger in Form einer SIM-Karte vorliegt.

9. Verfahren nach einem der Ansprüche 1 bis 8, **dadurch gekennzeichnet, dass** bei Schritt a) zusätzlich eine Plausibilitätsprüfung erfolgt, indem bspw. dem Identifikationsmodul (2) Netzwerkinformationen übermittelt werden, die das für die Übersendung bei Schritt a) verwendete Netzwerk betreffen.

10. Verfahren nach Anspruch 9, **dadurch gekennzeichnet, dass** die Netzwerksinformationen Angaben über einen Provider und/oder die bei Schritt a) verwendete Funkzelle beinhalten.

11. Verfahren nach einem der Ansprüche 1 bis 10, **dadurch gekennzeichnet, dass** der Transaktionscode auf dem Display des Mobiltelefons (11) angezeigt, aber nicht auf einem Datenträger in dem Mobiltelefon (11) gespeichert wird.

12. Verfahren nach einem der Ansprüche 1 bis 11, **dadurch gekennzeichnet, dass** Informationen bezüglich der Aktion, auf die sich Schritt a) bezieht, in einem Datenträger des Mobiltelefons (11) abgelegt werden.

13. Verfahren nach Anspruch 12, **dadurch gekennzeichnet, dass** die Informationen von dem Mobiltelefon (11) ausgelesen und/oder zu einem anderen Gerät übertragen werden.

14. Verfahren nach einem der Ansprüche 1 bis 13, **dadurch gekennzeichnet, dass** bei Schritt d) eine Identifikationsnummer von dem Identifikationsmodul (2) zusätzlich an das Terminal (3) der dritten Stelle gesendet (77) wird

15. Verfahren nach einem der Ansprüche 1 bis 14, **dadurch gekennzeichnet, dass** die Kommunikation zwischen dem Identifikationsmodul (2) und dem Terminal (3) über eine Luftschnittstelle erfolgt.

16. Verfahren nach einem der Ansprüche 1 bis 15, **dadurch gekennzeichnet, dass** die Kommunikation zwischen dem Identifikationsmodul (2) und dem Terminal (3) wenigstens teilweise verschlüsselt erfolgt.

17. Verfahren nach einem der Ansprüche 1 bis 16, **dadurch gekennzeichnet, dass** die Kommunikation zwischen dem Mobiltelefon (11) und dem Terminal (3) über eine Luftschnittstelle erfolgt.

18. Verfahren nach einem der Ansprüche 1 bis 17, **dadurch gekennzeichnet, dass** die Kommunikation zwischen dem Mobiltelefon (11) und dem Terminal (3) wenigstens teilweise verschlüsselt erfolgt.

19. Verfahren nach einem der Ansprüche 1 bis 18, **dadurch gekennzeichnet, dass** die Kommunikation zwischen dem Mobiltelefon (11) und dem Terminal (3) wenigstens teilweise mittels eines Datenkanals, wie zum Beispiel einer SMS-Nachricht des GSMStandards erfolgt.

20. Verfahren nach einem der Ansprüche 1 bis 19, **dadurch gekennzeichnet, dass** die Nachricht eine Identifikationsnummer beinhaltet.

21. Verfahren nach einem der Ansprüche 1 bis 20, **dadurch gekennzeichnet, dass** bei Schritt d) zusätzlich ein maximaler Betrag für die Auszahlung als Auszahlungsrahmen von dem Identifikationsmodul (2) an das Terminal (3) gesendet wird.

22. Verfahren nach 'Anspruch 21, **dadurch gekennzeichnet, dass** der Auszahlungsrahmen von dem Identifikationsmodul (2) unter Zuhilfenahme von diesbezüglichen Angaben eines mit dem Zahlungsvorgang beauftragten Geldinstituts überprüft wird.

23. Verfahren nach einem der Ansprüche 1 bis 22, **dadurch gekennzeichnet, dass** bei Schritt e) zusätzlich der konkrete Auszahlungsbetrag an das Terminal (3) übermittelt oder in das Terminal (3) eingegeben wird.

24. Verfahren nach einem der vorhergehenden Ansprüche zur Anforderung einer Benutzung eines Geldautomaten, wobei bei Schritt a) zusätzlich Angaben über den betreffenden Geldautomaten von dem Mobiltelefon (11) an das Identifikationsmodul (2) gesendet

25. System zur Durchführung eines Verfahrens nach einem der Ansprüche 1 bis 24, aufweisend ein Mobiltelefon (11), ein Identifikationsmodul (2) und ein Terminal (3), **dadurch gekennzeichnet, dass** die Kommunikation zwischen dem Mobiltelefon (11), dem Identifikationsmodul (2) und dem Terminal (3) jeweils über eine Luftschnittstelle erfolgt.

26. Terminal (3), programmiert zur Durchführung der für das Terminal vorgesehenen Schritte eines Verfahrens nach einem 5 der Ansprüche 1 bis 24.

27. Computerprogramm aufweisend einen Computerprogrammcode zum Ausführen der Schritte des Verfahrens nach einem der Ansprüche 1 bis 24.

## Claims

1. Method for carrying out a disbursement transaction between a user (1) of a mobile telephone (11) with the aid of the mobile telephone (11), an identification module (2) and a terminal (3) of a cash machine, having the following steps:
a) transmission (5) of an action authorization request for the disbursement transaction together with an identification code from the mobile telephone (11) and an identification number of the relevant cash machine to the identification module (2), wherein the action authorization request indicates the nature and at least one parameter of the requested action authorization,
b) checking by the identification module (2), of whether an action authorization with the at least one parameter is permissible for the identification code, and in the event that it is permissible:
c) generation (6) of a transaction code for the requested action authorization by the identification module (2), wherein the transaction code documents an approval of the action with the at least one parameter by the identification module (2) vis-à-vis at least one third party having the terminal (3), and wherein the transaction code is valid for a limited period of time,
d) transmission (7, 77) of the transaction code from the identification module (2) to the mobile telephone (11),
e) sending and/or input of a message (8'), having the transaction code, by the user (1) of the mobile telephone (11) to the terminal (3), wherein the action to which step a) refers is terminated by step e), **characterized in that** in step d) additionally the transaction code is transmitted (7, 77) from the identification module (2) to the terminal (3), wherein the transaction code indicates vis-à-vis the terminal (3) that the identified user is permitted to perform the disbursement transaction specified by the parameter and the terminal (3) in step e) makes it possible to access the cash machine.

2. Method according to claim 1, **characterized in that** the maximum number of action authorizations for which the transaction code is valid is restricted.

3. Method according to claim 1 or 2, **characterized in that** in step a) additionally a personal identification number of the user (1) is sent from the mobile telephone (11) to the identification module (2).

4. Method according to one of claims 1 to 3, **characterized in that** communication between the mobile telephone (11) and the identification module (2) is at least partially encrypted.

5. Method according to one of claims 1 to 4, **characterized in that** communication between the mobile telephone (11) and the identification module (2) takes place at least partially by means of a data channel such as for example an SMS message of the GSM standard.

6. Method according to one of claims 1 to 5, **characterized in that** during communication between the mobile telephone (11) and the identification module (2) data read out from a data carrier in the mobile telephone (11) are used.

7. Method according to claim 6, **characterized in that** the data carrier is a card with memory function inserted in the mobile telephone (11).

8. Method according to claim 7, **characterized in that** the data carrier is present in the form of a SIM card.

9. Method according to one of claims 1 to 8, **characterized in that** in step a) a plausibility check additionally takes place by for example network information which relates to the network used for the transmission in step a) being transmitted to the identification module (2).

10. Method according to claim 9, **characterized in that** the network information contains details about a provider, and/or the radio cell used in step a).

11. Method according to one of claims 1 to 10, **characterized in that** the transaction code is displayed on the display of the mobile telephone (11), but is not stored in a data carrier in the mobile telephone (11).

12. Method according to one of claims 1 to 11, **characterized in that** information with regard to the action to which step a) refers is stored in a data carrier of the mobile telephone (11).

13. Method according to claim 12, **characterized in that** the information is read out from the mobile telephone (11) and/or transmitted to another device.

14. Method according to one of claims 1 to 13, **characterized in that** in step d) an identification number is additionally sent (77) from the identification module (2) to the terminal (3) of the third party.

15. Method according to one of claims 1 to 14, **characterized in that** communication between the identification module (2) and the terminal (3) takes place via an air interface.

16. Method according to one of claims 1 to 15, **characterized in that** communication between the identification module (2) and the terminal (3) is at least partially encrypted.

17. Method according to one of claims 1 to 16, **characterized in that** communication between the mobile telephone (11) and the terminal (3) takes place via an air interface.

18. Method according to one of claims 1 to 17, **characterized in that** communication between the mobile telephone (11) and the terminal (3) is at least partially encrypted.

19. Method according to one of claims 1 to 18, **characterized in that** communication between the mobile telephone (11) and the terminal (3) takes place at least partially by means of a data channel such as, for example, an SMS message of the GSM standard.

20. Method according to one of claims 1 to 19, **characterized in that** the message contains an identification number.

21. Method according to one of claims 1 to 20, **characterized in that** in step d) additionally a maximum amount for the disbursement is sent as disbursement limit from the identification module (2) to the terminal (3).

22. Method according to claim 21, **characterized in that** the disbursement limit is checked by the identification module (2) with the aid of details relating to this of a bank instructed with the payment transaction.

23. Method according to one of claims 1 to 22, **characterized in that** in step e) additionally the actual amount paid is transmitted to the terminal (3) or inputted into the terminal (3).

24. Method according to one of the previous claims for requesting the use of a cash machine, wherein in step a) additionally details about the relevant cash machine are sent from the mobile telephone (11) to the identification module (2).

25. System for carrying out a method according to one of claims 1 to 24, having a mobile telephone (11), an identification module (2) and a terminal (3), **characterized in that** communication between the mobile telephone (11), the identification module (2) and the terminal (3) takes place in each case via an air interface.

26. Terminal (3), programmed to carry out the steps of a method according to one of claims 1 to 24 provided for the terminal.

27. Computer program having a computer program code for performing the steps of the method according to one of claims 1 to 24.

## Revendications

1. Procédé de traitement d'une procédure de paiement entre l'utilisateur (1) d'un téléphone mobile (11) à l'aide d'un téléphone mobile (11), un module (2) d'identification et un terminal (3) d'un distributeur de billets, comprenant les étapes suivantes :
a) Envoi (5) d'une demande d'autorisation d'action pour la procédure de paiement accompagnée d'un code d'identification du téléphone mobile (11) et d'un identifiant du distributeur de billets concerné au module (2) d'identification, la demande d'autorisation d'action indiquant la nature et au moins un paramètre de l'autorisation d'action demandée,
b) Vérification par le module (2) d'identification qu'une autorisation d'action avec l'au moins un paramètre peut être accordée pour ce code d'identification, et en cas d'autorisation :
c) Génération (6) d'un code de transaction pour l'autorisation d'action requise par le module (2) d'identification, le code de transaction justifiant une validation de l'action avec l'au moins paramètre par le module (2) d'identification auprès d'une troisième position, comprenant le terminal (3), et la validité du code de transaction étant limitée dans le temps,
d) Envoi (7, 77) du code de transaction par le module (2) d'identification au téléphone mobile (11),
e) Envoi et/ou saisie d'un message (8'), comprenant le code de transaction, par l'utilisateur (1) du téléphone mobile (11), au terminal (3), l'action à laquelle l'étape a) se réfère étant programmée par l'étape e). Ledit procédé est **caractérisé en ce qu'**à l'étape d) le module (2) d'identification envoie (7, 77), en plus, le code de transaction au terminal (3), le code de transaction indiquant au terminal (3) que l'utilisateur identifié a le droit d'exécuter la procédure de paiement spécifiée par le paramètre et **en ce qu'**un accès au distributeur de billets est ouvert par le terminal (3) à l'étape e).

2. Procédé selon la revendication 1, **caractérisé en ce que** le nombre maximum d'autorisations d'actions pour lesquelles le code de transaction est valable, est limité.

3. Procédé selon la revendication 1 ou la revendication 2, **caractérisé en ce qu'**à l'étape a), le téléphone mobile (11) envoie, en plus, un numéro d'identification personnel de l'utilisateur (1) au module (2) d'identification.

4. Procédé selon l'une quelconque des revendications 1 à 3, **caractérisé en ce que** la communication entre le téléphone mobile (11) et le module (2) d'identification est au moins en partie chiffrée.

5. Procédé selon l'une quelconque des revendications 1 à 4, **caractérisé en ce que** la communication entre le téléphone mobile (11) et le module (2) d'identification s'effectue au moins en partie au moyen d'un canal de données, tel qu'un SMS de la norme GSM.

6. Procédé selon l'une quelconque des revendications 1 à 5, **caractérisé en ce que** des données lues sur un support de données du téléphone mobile (11) sont utilisées lors de la communication entre le téléphone mobile (11) et le module (2) d'identification.

7. Procédé selon la revendication 6, **caractérisé en ce que** le support de données est une carte insérée dans le téléphone mobile (11) avec fonction mémorisation.

8. Procédé selon la revendication 7, **caractérisé en ce que** le support de données se présente sous forme de carte SIM.

9. Procédé selon l'une quelconque des revendications 1 à 8, **caractérisé en ce qu'**un contrôle de vraisemblance est effectué en plus à l'étape a), **en ce que**, par exemple, des informations réseau concernant le réseau utilisé pour l'envoi à l'étape a), sont transmises au module d'identification.

10. Procédé selon la revendication 9, **caractérisé en ce que** les informations réseau contiennent des indications sur un fournisseur et/ou la cellule utilisée à l'étape a).

11. Procédé selon l'une quelconque des revendications 1 à 10, **caractérisé en ce que** le code de transaction est affiché à l'écran du téléphone mobile (11) mais n'est pas enregistré sur un support de données dans le téléphone mobile (11).

12. Procédé selon l'une quelconque des revendications 1 à 11, **caractérisé en ce que** des informations sur l'action à laquelle l'étape a) se réfère sont enregistrées sur un support de données du téléphone mobile (11).

13. Procédé selon la revendication 12, **caractérisé en ce que** les informations du téléphone mobile (11) sont lues et/ou transmises à un autre appareil.

14. Procédé selon l'une quelconque des revendications 1 à 13, **caractérisé en ce qu'**à l'étape d), un numéro d'identification du module (2) d'identification est envoyé (77), en plus, au terminal (3) de la troisième position.

15. Procédé selon l'une quelconque des revendications 1 à 14, **caractérisé en ce que** la communication entre le module (2) d'identification et le terminal (3) passe par une interface radio.

16. Procédé selon l'une quelconque des revendications 1 à 15, **caractérisé en ce que** la communication entre le module (2) d'identification et le terminal (3) est au moins en partie chiffrée.

17. Procédé selon l'une quelconque des revendications 1 à 16, **caractérisé en ce que** la communication entre le téléphone mobile (11) et le terminal (3) passe par une interface radio.

18. Procédé selon l'une quelconque des revendications 1 à 17, **caractérisé en ce que** la communication entre le téléphone mobile (11) et le terminal (3) est au moins en partie chiffrée.

19. Procédé selon l'une quelconque des revendications 1 à 18, **caractérisé en ce que** la communication entre le téléphone mobile (11) et le terminal (3) s'effectue au moins en partie au moyen d'un canal de données, tel qu'un SMS de la norme GSM.

20. Procédé selon l'une quelconque des revendications 1 à 19, **caractérisé en ce que** le message contient un numéro d'identification.

21. Procédé selon l'une quelconque des revendications 1 à 20, **caractérisé en ce qu'**à l'étape d) le module (2) d'identification envoie, en plus, un montant maximum de paiement au terminal (3) comme cadre de paiement.

22. Procédé selon la revendication 21, **caractérisé en ce que** le cadre de paiement est vérifié par le module (2) d'identification à l'aide d'indications afférentes d'un établissement financier chargé de la procédure de paiement.

23. Procédé selon l'une quelconque des revendications 1 à 22, **caractérisé en ce qu'**à l'étape (e), le montant de paiement exact est transmis, en plus, au terminal (3), ou entré dans le terminal (3).

24. Procédé selon l'une quelconque des revendications précédentes, conçu pour demander l'utilisation d'un distributeur de billets, le téléphone mobile (11) envoyant, en plus, des indications sur le distributeur de billets concerné au module (2) d'identification à l'étape (a).

25. Système d'exécution d'un procédé selon l'une quelconque des revendications 1 à 24, comprenant un téléphone mobile (11), un module (2) d'identification et un terminal (3), **caractérisé en ce que** la communication entre le téléphone mobile (11), le module (2) d'identification et le terminal (3) passe respectivement par une interface radio.

26. Terminal (3), programmé pour l'exécution des étapes prévues pour le terminal d'un procédé selon l'une quelconque des revendications 1 à 24.

27. Programme informatique comprenant un code de programme informatique pour l'exécution des étapes du procédé selon l'une quelconque des revendications 1 à 24.
